# EUROPÄISCHE PATENTANMELDUNG

(11) **EP 4 729 983 A2**
(43) Veröffentlichungstag der Anmeldung: **22.04.2026**
(21) Anmeldenummer: 26154937.2
(22) Anmeldetag: 30.08.2018
(51) Int. Cl.: G01S 7/524

(54) **VORRICHTUNG UND VERFAHREN ZUR ÜBERTRAGERFREIEN ANSTEUERUNG EINES ULTRASCHALLTRANSDUCERS**

(30) Priorität: 07.03.2018 DE 102018105284; 07.03.2018 DE 102018105283
(62) Teilanmeldung aus: 18191720.4
(71) Anmelder: Elmos Semiconductor SE, 51379 Leverkusen (DE)
(72) Erfinder: Friemann, Uwe, 51379 Leverkusen (DE); Kapoor, Niron, 51379 Leverkusen (DE)
(74) Vertreter: dompatent

(57) **Zusammenfassung**

**Betriebsschaltung** für einen Transducer (TR)
- mit einer Ansteuerschaltung (TS, C_{bat}, T₁, T₂, T₃, T₄, T₅) und
- mit einer Transducer-Kapazität (C_{TR}),
- wobei die Ansteuerschaltung einen ersten Anschluss (GND) aufweist und
- wobei die Ansteuerschaltung einen zweiten Anschluss (DRV) aufweist und
- wobei die Ansteuerschaltung einen Treiberausgangswiderstand (R_{DRV}) aufweist, der auch ganz oder teilweise durch den Ausgangswiderstand der Ansteuerschaltung an ihrem zweiten Ausgang (DRV) und/oder einen zusätzlichen Treiberausgangswiderstand, der in Serie zu ihrem zweiten Ausgang geschaltet ist, gebildet wird und
- wobei ein positiver Anschluss (TR+) des Transducers (TR) so mit dem zweiten Anschluss (DRV) der Ansteuerschaltung verbunden ist, dass der Treiberausgangswiderstand (R_{DRV}) wirkmäßig als zwischen dem positiven Anschluss (TR+) des Transducers (TR) und dem zweiten Anschluss (DRV) der Ansteuerschaltung geschaltet betrachtet werden kann, und
- wobei ein negativer Anschluss (TR-) des Transducers (TR) mit dem ersten Anschluss (GND) der Ansteuerschaltung verbunden ist,
- wobei die Betriebsschaltung eine Ausgangsinduktivität (L_{DRV}) aufweist, die wirkmäßig als zwischen dem positiven Anschluss (TR+) des Transducers (TR) und dem zweiten Anschluss (DRV) der Ansteuerschaltung in Serie mit dem Treiberausgangswiderstand (R_{DRV}) geschaltet betrachtet werden kann, und
- wobei der Wert dieser Ausgangsinduktivität (L_{DRV}) so bemessen ist,
- dass ein erster Serienschwingkreis aus Serieninduktivität (L_{TRS}) des Ersatzschaltbilds des Transducers (TR) und Serienkapazität (C_{TRS}) des Ersatzschaltbilds des Transducers (TR) und
- dass ein zweiter Serienschwingkreis aus Ausgangsinduktivität L_{DRV} und der Parallelschaltung aus Transducer-Kapazität (C_{TR}) und Parallelkapazität (C_{TRp}) des Ersatzschaltbilds des Transducers (TR) kritisch gekoppelt sind,
wobei
ein durch den Transducer (TR) gegebener Transducer-Schwingkreis durch eine Transducer-Impedanz (Z_{TR}) repräsentiert wird,
ein Treiberausgangs-Schwingkreis durch eine Treiberausgangsimpedanz (Z_{DRV}) repräsentiert wird
der durch (Z_{TR}) repräsentierte Transducer-Schwingkreis zusammen mit dem durch (Z_{DRV}) repräsentierten Treiberausgangs-Schwingkreis einen Bandpass BPF bildet,

## Beschreibung

### Oberbegriff

Die Erfindung betrifft eine übertragerfreie Betriebsschaltung für einen Ultraschall-Transducer (TR).

### Allgemeine Einleitung

Im Zuge der Entwicklung von Fahrerassistenzsystemen zum autonomen Fahren sind Sensorsysteme zur Detektion der Fahrzeugumgebungssituation von besonderer Wichtigkeit. Ultraschallsensoren werden schon heute für die Erstellung sogenannter Umgebungskarten genutzt. Ein immer wieder auftretendes Problem ist der Wunsch nach einer Maximierung der Reichweite bei gleichzeitig niedrigen Kosten. In der Vergangenheit wurden zur Ansteuerung der PiezoSchwinger von Ultraschall-Transducern Übertrager (Transformatoren) eingesetzt. Auf diese soll jedoch aus Kostengründen verzichtet werden. Dies hat im Stand der Technik eine Begrenzung der Amplitude der Spannung der Transducer-Schwingung an den Transducer-Anschlüssen auf das doppelte der Betriebsspannung zur Folge, wobei hier unter Betriebsspannung die Versorgungsspannung der Ausgangstreiberstufe verstanden wird. Diese wiederum kann mit einer Ladungspumpe oder ähnlichen Verfahren deutlich über die am Eingang des Systems angelegte Spannung hinausgehen.

### Stand der Technik

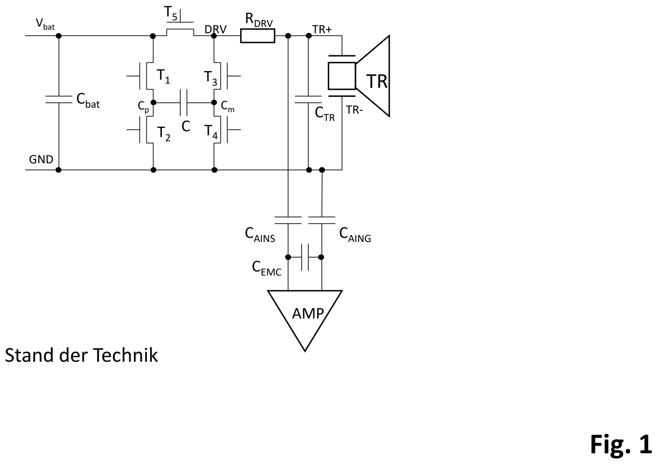

Der Stand der Technik wird anhand von Fig. 1 erläutert. Fig. 1 zeigt schematisch und vereinfacht die Treiberstufe für einen Ultraschall-Transducer aus dem Stand der Technik. Da die Erfindung sich nur mit dem Antrieb des piezoelektrischen Schwingelements eines Transducers befasst, gilt das Folgende auch für Ultraschallsender mit einem piezoelektrischen Schwingelement.

Die Betriebsspannung (V_{bat}) wird über einen Stützkondensator (C_{bat}) stabilisiert, der typischerweise relativ groß gewählt ist.

In einer Ansteuerphase wird der Transducer (TR) angetrieben.

In einer ersten Phase der Ansteuerphase wird hierfür der fünfte Transistor (T₅) durchgeschaltet. Der positive Anschluss (TR+) des Transducers (TR) wird dann in dieser ersten Phase über den Treiberausgangswiderstand (R_{DRV}) mit der Betriebsspannung (V_{bat}) verbunden. Gleichzeitig werden der erste Transistor (T₁) und der vierte Transistor (T₄) durchgeschaltet. Hierdurch wird die Treiberkapazität (C) mit ihrem ersten Anschluss (Cₚ) mit der Betriebsspannung (V_{bat}) und mit ihrem zweiten Anschluss (Cₘ) mit dem Bezugspotenzial (GND) verbunden. Der dritte Transistor (T₃) und der zweite Transistor (T₂) sind in dieser ersten Phase gesperrt.

In einer zweiten Phase der Ansteuerphase werden der fünfte Transistor (T₅), der erste Transistor (T₁) und der vierte Transistor (T₄) gesperrt. Stattdessen werden in dieser zweiten Phase der zweite Transistor (T₂) und der dritte Transistor (T₃) durchgeschaltet. Hierdurch wird die zuvor auf die Betriebsspannung (V_{bat}) aufgeladene Treiberkapazität (C) mit ihrem ersten Anschluss (Cₚ) mit dem Bezugspotenzial (GND) verbunden und mit Ihrem zweiten Anschluss (Cₘ) mit dem Treiberausgang (DRV) verbunden. Der Treiberausgang vollführt hierdurch einen Spannungssprung um das doppelte des Betrags der Spannung der Betriebsspannung (V_{bat}) unter das Bezugspotenzials (GND).

Die ersten und zweiten Phasen der Ansteuerphasen wechseln sich nun bevorzugt mit der Resonanzfrequenz der Transducer-Schaltung, bestehend aus dem Treiberausgangswiderstand (R_{DRV}), der Transducer-Kapazität (C_{TR}) und dem Transducer (TR) ab. Hierdurch wird das piezoelektrische Schwingelement des Transducers (TR) in Schwingungen versetzt.

Nach der Ansteuerphase folgt die Empfangsphase. Hierbei werden zumindest der fünfte Transistor (T₅) und der dritte Transistor (T₃) gesperrt. Hierdurch wird keine elektrische Energie mehr auf den Transducer (TR) übertragen.

Ein Nachteil der Schaltung der Fig. 1 ist, dass die maximale Amplitude der Betriebsspannung des Transducers an dem positiven Transducer-Anschluss (TR+) und an dem negativen Transducer-Anschluss (TR-) auf das doppelte des Betrags der Betriebsspannung (V_{bat}) begrenzt ist.

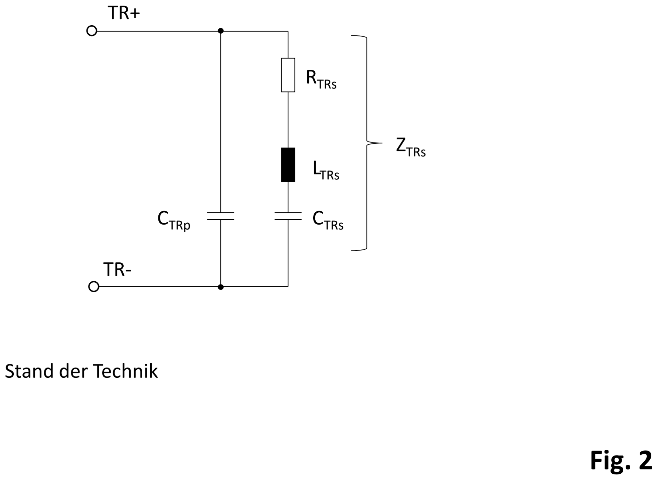

Fig. 2 zeigt ein aus dem Stand der Technik bekanntes Ersatzschaltbild für einen Ultraschall-Transducer (TR). Das Ersatzschaltbild weist eine Parallelkapazität (C_{TRp}), einen Serienwiderstand (R_{TRs}), eine Serienkapazität (C_{TRs}) und eine Serieninduktivität (L_{TRs}) auf. Der Ultraschall-Transducer wird über einen positiven Anschluss (TR+) und einen negativen Anschluss (TR-) angeschlossen. Die Bezeichnungen "positiver Anschluss (TR+)" und "negativer Anschluss (TR-)" dienen hier nur der besseren Orientierung und haben keinen physikalischen Hintergrund.

### Aufgabe der Erfindung

Der Erfindung liegt die Aufgabe zugrunde, eine Lösung zu schaffen, die den obigen Nachteil des Stands der Technik nicht aufweist und weitere Vorteile aufweist.

### Lösung der Aufgabe

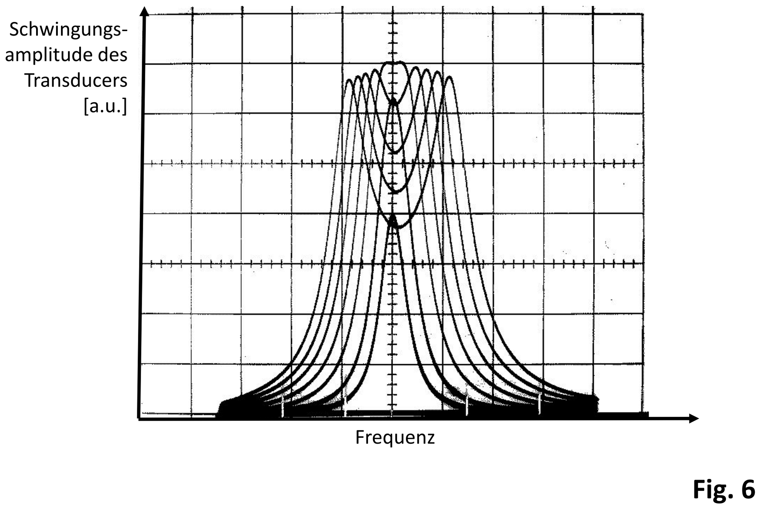

Diese Aufgabe wird durch eine Vorrichtung zum Betreiben eines Ultraschall-Transducers gelöst, dessen Ersatzschaltbild eine Serienschaltung aus einer Serieninduktivität und einer Serienkapazität und eine zur Serienschaltung parallel geschaltete Parallelkapazität aufweist, wobei die Vorrichtung versehen ist mit
- einer Ansteuerschaltung und
- wobei die Ansteuerschaltung einen ersten Ausgangsanschluss und einen zweiten Ausgangsanschluss aufweist,
- einem Treiberausgangswiderstand, der auch ganz oder teilweise durch den Ausgangswiderstand der Ansteuerschaltung an ihrem zweiten Ausgang und/oder einen zusätzlichen Treiberausgangswiderstand, der in Serie zu ihrem zweiten Ausgang geschaltet ist, gebildet wird und
- wobei der Treiberausgangswiderstand wirkmäßig zwischen einem positiven Anschluss für den Transducer und dem zweiten Ausgangsanschluss der Ansteuerschaltung geschaltet ist, und
- wobei ein negativer Anschluss für den Transducer mit dem ersten Ausgangsanschluss der Ansteuerschaltung verbunden ist,
- einer Transducer-Kapazität, die zwischen dem positiven Anschluss und dem negativen Anschluss für den Transducer geschaltet ist, und
- einer den Treiberausgangswiderstand aufweisenden Treiberausgangsimpedanz, die wirkmäßig zwischen dem positiven Anschluss des Transducers und dem zweiten Ausgangsanschluss der Ansteuerschaltung in Serie mit dem Treiberausgangswiderstand geschaltet ist,
- wobei der Wert der Treiberausgangsimpedanz so bemessen ist, dass
- ein erster Serienschwingkreis aus der Serieninduktivität und der Serienkapazität des Ersatzschaltbilds des Transducers und
- ein zweiter Serienschwingkreis aus der Treiberausgangsimpedanz und der Parallelschaltung aus Transducer-Kapazität und Parallelkapazität des Ersatzschaltbilds des Transducers
   kritisch gekoppelt sind (was weiter unten im Zusammenhang mit der Fig. 6 erläutert wird).

Insbesondere wird der Wert der Treiberausgangsimpedanz durch entsprechende Wahl der Treiberausgangsinduktivität der Treiberausgangsimpedanz, die gegebenenfalls auch noch eine Treiberausgangskapazität aufweisen kann, entsprechend gewählt, so dass die beiden zuvor genannten Schwingkreise kritisch gekoppelt sind.

Ferner wird die obige Aufgabe gelöst durch die Verwendung der vorgenannten Vorrichtung, wobei vorgesehen ist, dass der Transducer (TR) nach dem Ende einer Ansteuerphase mit einer Wechselspannung zwischen dem positiven Anschluss (TR+) des Transducers (TR) und dem negativen Anschluss (TR-) des Transducers (TR) betrieben wird, die einen Spitze-zu-Spitze-Wert aufweist, der zu Beginn der Ausschwingphase des Transducers (TR) betragsmäßig mehr als das doppelte des Betrags der Betriebsspannung (V_{bat}) der Vorrichtung beträgt.

Schließlich wird die obige Aufgabe auch gelöst durch ein Verfahren zum Betreiben eines Transducers (TR) mittels der vorgenannten Vorrichtung mit den folgenden Schritten:
- Bereitstellen des Transducers (TR),
- Koppeln des Transducers (TR) mit der Mittenanzapfung (TR+) des ersten Serienschwingkreises (L_{DRV}, C_{TR}, C_{TRp}) aus der Treiberausgangsimpedanz (Z_{DRV}) und der Parallelschaltung aus einer Transducer-Kapazität (C_{TR}) und der Parallelkapazität (C_{TRp}) des Ersatzschaltbildes des Transducers (TR) und mit einem Bezugspotenzial (GND, TR-), wobei der erste Serienschwingkreis (L_{DRV}, C_{TR}) ebenfalls mit dem Bezugspotenzial (GND) gekoppelt ist,
- Wahl des Werts der Treiberausgangsimpedanz (Z_{DRV}), insbesondere des Werts ihrer Treiberausgangsinduktivität (L_{DRV}), und des Werts der Transducer-Kapazität (C_{TR}) des ersten Serienschwingkreises (L_{DRV}, C_{TR}, C_{TRp}) in der Art, dass die Kopplung zwischen einerseits dem zweiten Serienschwingkreis, bestehend aus der Serieninduktivität (L_{TRs}) und der Serienkapazität (C_{TRs}) des Ersatzschaltbildes des Transducers (TR) und andererseits dem ersten Serienschwingkreis kritisch ist, und
- Ansteuerung der beiden gekoppelten Serienschwingkreise mit einer Wechselspannung, wobei der Spitze-zu-Spitze-Wert der zur Ansteuerung genutzten Wechselspannung in zumindest einem Zeitraum kleiner ist als die messbare Wechselspannung zwischen einem ersten Anschluss (TR+) und einem zweiten Anschluss (TR-) des Transducers (TR).

Bei einer Betriebsschaltung der eingangs beschriebenen Art wird die Aufgabe nun dadurch gelöst, dass eine Ausgangsinduktivität (V_{DRV}) in die Anschlussleitung des Transducers (TR) eingefügt wird.

Im Rahmen der Erfindung wurde erkannt, dass das schwingfähige System dritter Ordnung, das durch den Treiberausgangswiderstand (R_{DRV}), die Transducer-Kapazität (C_{TR}) und den Transducer gebildet wird, für den Betrieb ungünstig ist und dass es zwar komplexer, aber günstiger ist, ein schwingfähiges System vierter Ordnung zu verwenden.

Der Transducer in der Schaltung nach Fig. 1 kann, wie bereits beschrieben, durch ein Ersatzschaltbild aus einer Serienschaltung aus einer Serienkapazität (C_{TRs}), einer Serieninduktivität (L_{TRs}) und einem Serienwiderstand (R_{TRs}) mit einer zu dieser Serienschaltung parallel geschalteten Parallelkapazität (C_{TRp}) dargestellt werden. Der Serienwiderstand (R_{TRs}) repräsentiert die mechanischen Verluste und die akustische Abstrahlung des Transducers (TR). Die Spannung über diesem Serienwiderstand (Rₛ) soll zur Maximierung der Reichweite einer Ultraschall-Einparkhilfe maximiert werden. Die Parallelkapazität (C_{TRp}) wird typischerweise durch die transducerexterne Transducer-Kapazität (C_{TR}) dominiert. Somit verfügt der Transducer (TR) über eine Serien-und eine Parallelresonanz. Die Serienresonanz wird durch den Serienschwingkreis aus Serienkapazität (C_{TRs}) und Serieninduktivität (L_{TRs}) und in geringem Maße durch den Serienwiderstand (R_{TRs}) und damit die Schallabstrahlung bestimmt.

Erfindungsgemäß wird nun durch einen weiteren Energiespeicher im Übertragungssystem eine weitere Polstelle erzeugt. Hierfür wurde erkannt, dass es günstig ist, in Serie zu dem Treiberausgangswiderstand (R_{DRV}) eine zusätzliche Ausgangsinduktivität (L_{DRV}) einzufügen. Diese Ausgangsinduktivität (L_{DRV}) bildet mit der Transducer-Kapazität (C_{TR}) einen zweiten Serienschwingkreis. An die Ausgangsinduktivität (L_{DRV}) ist vermittels des positiven Transducer-Anschlusses (TR+) der Serienschwingkreis des Transducers (TR) angeschlossen (Zur Vereinfachung sei hier davon ausgegangen, dass die Transducer-Kapazität (C_{TR}) und die Parallelkapazität (C_{TRp}) des Transducers (TR) durch die Transducer-Kapazität (C_{TR}) gut abgebildet werden). Ggf. ist hier also der Begriff Transducer-Kapazität (C_{TR}) durch die Parallelschaltung aus Transducer-Kapazität (C_{TR}) und Parallelkapazität (C_{TRp}) des Transducers (TR) zu ersetzen. Es wird aber ferner davon ausgegangen, dass die Transducer-Kapazität (C_{TR}) wesentlich größer ist als die Parallelkapazität (C_{TRp}) des Transducers (TR).

Die Ausgangsinduktivität (LDRV), die Transducer-Kapazität (C_{TR}), die Serienkapazität des Transducers (TR) und die Serieninduktivität des Transducers (TR) bilden somit ein schwingfähiges System vierter Ordnung.

Es wurde im Rahmen der Erfindung erkannt, dass bei dem schwingfähigen System vierter Ordnung je nach Wahl der Komponenten
1. Ausgangsinduktivität (L_{DRV}),
2. Transducer-Kapazität (C_{TR}),
3. Serienkapazität des Transducers (TR) und
4. Serieninduktivität des Transducers (TR)
die folgenden drei Szenarien gegeben sein können:
a. Die Serienschwingkreise des Systems können unterkritisch gekoppelt sein.
b. Die Serienschwingkreise des Systems können überkritisch gekoppelt sein.
c. Die Serienschwingkreise des Systems können kritisch gekoppelt sein.

Sämtliche drei Begriffe entstammen der Beschreibung induktiv gekoppelter Schwingkreise in der Hochfrequenztechnik. Bei einer unterkritischen Kopplung ist der normierte Kopplungsfaktor < 1, bei überkritischer Kopplung ist er > 1 und bei kritischer Kopplung beträgt der normierte Kopplungsfaktor 1. Der normierte Kopplungsfaktor ist gleich dem Quotienten aus Kopplungsfaktor und Dämpfung. Der Kopplungsfaktor beschreibt, wie stark zwei Schwingkreise induktiv gekoppelt sind.

Es wurde erkannt, dass für das System eine unterkritische Kopplung nicht optimal ist, weil dann die Bandbreite des Systems zu groß wird und dadurch zu viel Rauschen durch das System aufgenommen wird.

Es wurde des Weiteren erkannt, dass für das System eine überkritische Kopplung ebenfalls nicht optimal ist, weil dann im Arbeitsfrequenzbereich eine Dämpfung einsetzt und somit die maximale Schwingungsamplitude des Transducers reduziert wird und damit auch die Reichweite einer ultraschallbasierten Einparkhilfe reduziert wird.

Es wurde des Weiteren erkannt, dass für das System eine kritische Kopplung optimal ist, weil dann die Schwingkreise die optimale Bandbreite haben.

Die Ausgangsinduktivität (L_{DRV}) muss somit eine definierte Induktivität und Güte haben, die diesen Fall kritischer Kopplung hervorruft.

Die Ausgangsinduktivität (L_{DRV}) zeichnet sich somit dadurch aus, dass sie zusammen mit der Transducer-Kapazität (C_{TR}) einen Serienschwingkreis bildet. Da es sich um ein System vierter Ordnung handelt, wird empfohlen, die Polstellen durch eine geeignete numerische Näherung in Abhängigkeit zu bestimmen.

Der Bereich kritischer Kopplung ist dabei ein Arbeitspunkt, der infolge von Fertigungstoleranzen der verschiedenen Komponenten nie ganz exakt getroffen werden kann. Daher sollte die Resonanzfrequenz der Serienresonanz des Transducers (TR) nie mehr als 3dB neben dem Maximum der frequenzabhängigen Impedanz aus Ausgangsinduktivität (L_{DRV}), Transducer-Kapazität (C_{TR}) plus Parallelkapazität (C_{TRp}) des Transducers (TR), Serienkapazität des Transducers (TR) und Serieninduktivität des Transducers (TR) liegen. Die Transducer (TR) haben eine Frequenzbandbreite von typischerweise +/- 1 kHz. Diese Transducer-Frequenzen sollen somit bevorzugt um nicht mehr als 3dB vom Optimum in der zu erwartenden Schwingungsamplitude abweichen. Über den Treiberausgangswiderstand (R_{DRV}) wird bevorzugt die Bandbreite und über die Ausgangsinduktivität (L_{DRV}) die Frequenz der Schwingung eingestellt.

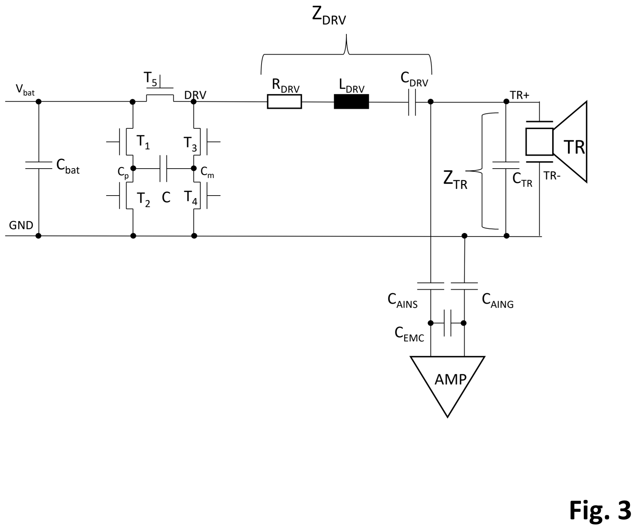

Es wird somit eine Betriebsschaltung für einen Ultraschall-Transducer (TR) vorgeschlagen, die eine Ansteuer- bzw. Treiberschaltung, hier beispielhaft bestehend aus dem Stützkondensator (C_{bat}), den Transistoren (T₁, T₂, T₃, T₄, T₅), und eine zum Transducer (TR) parallelgeschaltete Transducer-Kapazität (C_{TR}) aufweist. Die Ansteuerschaltung weist des Weiteren einen ersten Anschluss (GND) und einen zweiten Anschluss (DRV) auf. Die Ansteuerschaltung weist einen Treiberausgangswiderstand (R_{DRV}) auf. Dieser Treiberausgangswiderstand (R_{DRV}) ist in den Fign. 1 und 3 diskret eingezeichnet. Die parasitären Widerstände der Transistoren können aber zu dem Wert dieses Treiberausgangswiderstands (R_{DRV}) beitragen. Der Treiberausgangswiderstand (R_{DRV}) kann daher auch ganz oder teilweise durch den Ausgangswiderstand der Ansteuerschaltung an ihrem zweiten Ausgang (DRV) realisiert sein. Auch können die Innenwiderstände der Transistoren, also der Ausgangswiderstand der Ansteuerschaltung, durch einen zusätzlichen Treiberausgangswiderstand, der in Serie zu dem zweiten Ausgang (DRV) der Ansteuerschaltung geschaltet ist, zum eigentlichen Treiberausgangswiderstand (R_{DRV}) ergänzt werden. Die Fign. 1 und 3 sind also insofern als vereinfachte symbolhafte Darstellungen zu verstehen, um das Wirkprinzip der Erfindung zu verdeutlichen.

Die Transducer-Kapazität (C_{TR}) kann durch die in dem Transducer (TR) vorhandene Kapazität gebildet werden und muss nicht als diskretes Element in der Schaltung vorhanden sein. Die Fign. 1 und 3 sind also insofern als vereinfachte symbolhafte Darstellungen zu verstehen, um das Wirkprinzip der Erfindung zu verdeutlichen.

Ein positiver Anschluss (TR+) des Transducers (TR) ist so mit dem zweiten Anschluss (DRV) der Ansteuerschaltung verbunden, dass der Treiberausgangswiderstand (R_{DRV}) wirkmäßig als zwischen dem positiven Anschluss (TR+) des Transducers (TR) und dem zweiten Anschluss (DRV) der Ansteuerschaltung geschaltet betrachtet werden kann. Ein negativer Anschluss (TR-) des Transducers (TR) ist dabei mit dem ersten Anschluss (GND) der Ansteuerschaltung verbunden.

Es ist erfindungsgemäß, dass eine (Treiber-)Ausgangsinduktivität (L_{DRV}) wirkmäßig als zwischen dem positiven Anschluss (TR+) des Transducers (TR) und dem zweiten Anschluss (DRV) der Ansteuerschaltung in Serie mit dem Treiberausgangswiderstand (R_{DRV}) geschaltet betrachtet werden kann. Des Weiteren ist nach der Erfindung vorgesehen, dass der Wert der Ausgangsinduktivität (L_{DRV}) so bemessen ist, dass die beiden Serienschwingkreise kritisch gekoppelt sind. Hiermit ist einerseits als erster Schwingkreis der Serienschwingkreis aus Serieninduktivität des Ersatzschaltbilds des Transducers (TR) und Serienkapazität des Ersatzschaltbilds des Transducers (TR) gemeint und andererseits als zweiter Schwingkreis der Serienschwingkreis aus Ausgangsinduktivität (L_{DRV}) und der Parallelschaltung aus Transducer-Kapazität (C_{TR}) und Parallelkapazität (C_{TRp}) des Ersatzschaltbilds des Transducers (TR) gemeint, die kritisch miteinander gekoppelt sind.

Der Begriff "kritische Kopplung" wurde oben mit einer Frequenzabweichung von weniger als +/-3dB hinsichtlich der Änderung der Impedanz erläutert. Liegt eine Schaltung in diesem Bereich, so ist sie im Sinne der Erfindung kritisch gekoppelt.

Besonders hervorzuheben ist, dass die Betriebsschaltung dazu vorgesehen werden kann, nach dem Ende einer Ansteuerphase den Transducer zwischen seinem positiven Anschluss (TR+) und seinem negativen Anschluss (TR-) mit einer Wechselspannungsamplitude zu betreiben, die einen Spitze-zu-Spitze-Wert aufweist, der zu Beginn der Ausschwingphase im zeitlichen Anschluss an die Ansteuerphase des Transducers (TR) betragsmäßig mehr als das doppelte des Betrags der Spannung der Betriebsspannung (V_{bat}) gegen ein Bezugspotenzial (GND) beträgt.

Die bevorzugte Betriebsschaltung für einen Transducer (TR) weist also einen kapazitiven Energiespeicher (C_{TR}) und einen induktiven Energiespeicher (L_{DRV}) auf, um diesen Pegel erzeugen zu können.

Dieser Betriebsschaltung entspricht ein Verfahren zum Betreiben eines Transducers (TR) mit den folgenden Schritten:
- Bereitstellen eines Transducers (TR),
- Koppeln des Transducers (TR) mit der Mittenanzapfung (TR+) eines Serienschwingkreises aus einer Ausgangsinduktivität (L_{DRV}) und einer Transducer-Kapazität (C_{TR}) und mit einem Bezugspotenzial (GND), wobei der Serienschwingkreis (L_{DRV}, C_{TR}) ebenfalls mit dem Bezugspotenzial gekoppelt ist,
- Wahl des Werts der Ausgangsinduktivität (L_{DRV}) und des Werts der Transducer-Kapazität (C_{TR}) in der Art, dass die Kopplung zwischen einerseits dem Serienresonanzkreis des Transducers (TR), bestehend aus dessen Serieninduktivität und dessen Serienkapazität und andererseits dem Serienresonanzkreis bestehend aus der Ausgangsinduktivität (L_{DRV}) und der Parallelschaltung aus Transducer-Kapazität (C_{TR}) und Parallelkapazität (C_{TRp}) des Transducers (TR) kritisch ist,
- Ansteuerung der beiden gekoppelten Serienresonanzkreise mit einer Wechselspannung, wobei die Spitze-zu-Spitze Spannung der zur Ansteuerung genutzten Wechselspannung in zumindest einem Zeitraum kleiner ist als die messbare Wechselspannung zwischen einem ersten Anschluss (TR+) und einem zweiten Anschluss (TR-) des Transducers (TR).

### Vorteil

Kern der Erfindung ist die Ansteuerung eines Ultraschallsenders (ggf. gekoppelt auch mit Empfangsfunktion, wie es bei einem Ultraschall-Transducer der Fall ist) mittels mindestens zweier kritisch gekoppelte LC-Schwingkreise. Der eine LC-Schwingkreis wird durch die parasitären Komponenten (L_{TRs}) und (C_{TRs}) des Ultraschall-Senders realisiert. Das Ersatzschaltbild des Ultraschall-Senders weist eine Reihenschaltung aus einer Induktivität, einer Kapazität und einem Widerstand auf, parallel zu der eine weitere Kapazität (C_{TRp}) liegt. In der Zuleitung zum Ultraschall-Sender wird dann eine Treiberausgangsinduktivität (L_{DRV}) eingebracht, so dass sich zwei gekoppelte LC-Schwingkreise ergeben. Diese werden kritisch gekoppelt, was bedeutet, dass der Frequenzgang im Bereich seines Maximums verbreitert ist und ein Plateau aufweist.

Aufgrund der kritischen Kopplung kommt es zu einer Amplitudenverstärkung und damit zu einer Ansteuerung des Ultraschall-Senders mit höherer Energie und damit mit dem Ergebnis, dass die Reichweite vergrößert wird. Genau das soll auf einfache Art und Weise erreicht werden, was mit der Erfindung tatsächlich gelingt.

Durch die vorgeschlagene Betriebsschaltung werden Schwingungspegel oberhalb des doppelten Betriebsspannungspegels möglich, ohne auf einen Übertrager zurückgreifen zu müssen. Die Vorteile sind hierauf aber nicht beschränkt.

Die Erfindung wird nachfolgend anhand mehrerer Ausführungsbeispiele und unter Bezugnahme auf die Zeichnung näher erläutert. Im Einzelnen zeigen dabei:
- Fig. 1: den Stand der Technik der Beschaltung eines Ultraschall-Transducers,
- Fig. 2: das Ersatzschaltbild eines Ultraschall-Transducers,
- Fig. 3: eine erfindungsgemäße Ergänzungsbeschaltung eines Ultraschall-Transducers,
- Fig. 4: eine alternative Ergänzungsbeschaltung eines Ultraschall-Transducers,
- Fig. 5: eine vereinfachte Darstellung der Ergänzungsbeschaltung nach Fig. 4 und
- Fign. 6 bis 9: verschiedene Signalverläufe.

### Beschreibung der Ausführungsbeispiele

Die wesentliche Erkenntnis der Erfindung ist darin zu sehen, die Treiberausgangsimpedanz Z_{DRV}, die einen ohmschen Anteil R_{DRV}, einen induktiven Anteil L_{DRV} und gegebenenfalls einen kapazitiven Anteil C_{DRV} aufweist (siehe die Schaltung in Fig. 3), auf die Transducer-Impedanz Z_{TR} abzustimmen. Die Transducer-Impedanz Z_{TR} setzt sich zusammen aus der Impedanz Z_{TRs} des Serienschwingkreises des Ersatzschaltbildes des Transducers mit R_{TRs}, C_{TRs} und L_{TRs} des Transducers, der Parallelkapazität C_{TRp} des Ersatzschaltbildes des Transducers und einer externen, mit den Anschlüssen Tr+ und Tr- des Transducers verbundenen weiteren Parallelkapazität C_{TR}. Die Abstimmung bzw. Anpassung beider Schwingkreise erfolgt dergestalt, dass die beiden Schwingkreise kritisch gekoppelt sind. Dazu wird z.B. die Treiberausgangsinduktivität L_{DRV} entsprechend gewählt, da typischerweise die Transducer-Impedanz durch die Hardware des Transducers gegeben ist. Durch die kritische Kopplung wird die in den Transducerserienwiderstand R_{TRs} eingebrachte und damit von diesem abgegebene Wirkleistung optimiert.

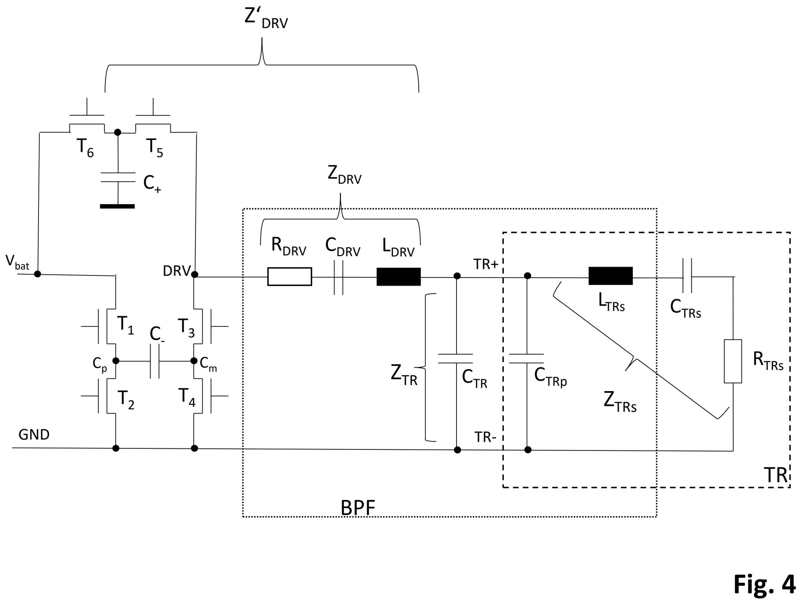

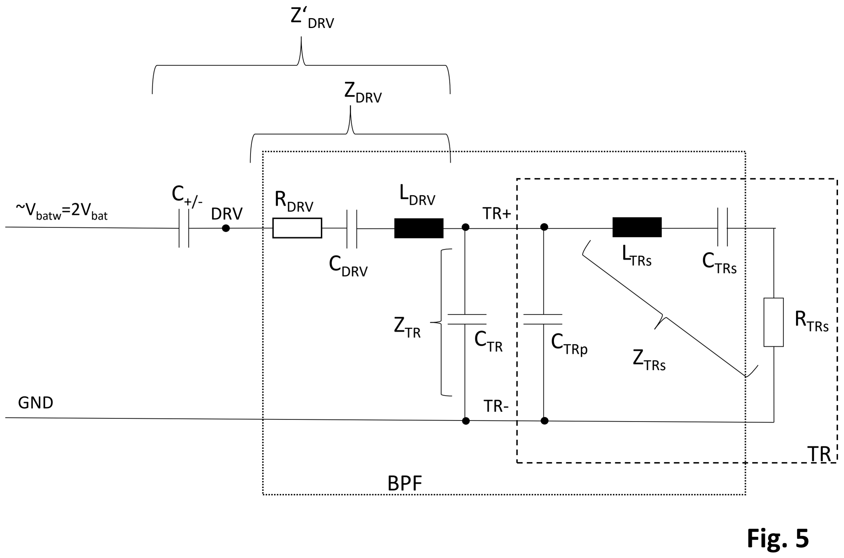

In den Fign. 4 und 5 ist eine Variante der Schaltung nach Fig. 3 gezeigt, bei der zur Maximierung der Wirkleistung in dem Transducerserienwiderstand R_{TRs} die Brückentreiberschaltung (Treiberstufe TS) sowohl in der positiven Halbwelle der Ansteuerung als auch in deren negativer Halbwelle den gleichen Innenwiderstand aufweist, um die Energieübertragung auf den Transducer zu maximieren, da dann eine optimale Widerstandsanpassung durch geeignete Wahl des Netzwerkes erreicht werden kann. Der Messschaltungsteil der Schaltung nach Fig. 3 ist in den Fign. 4 und 5 nicht gezeigt. Der Transducer TR bildet zusammen mit der Impedanz Z_{TR} bzw. Z_{DRV} einen Bandpass BPF.

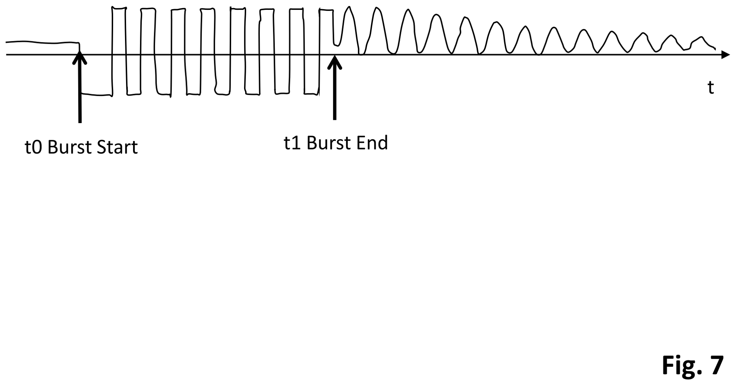

Die Beeinflussung der Kopplung beider Schwingkreise, nämlich des durch die Treiberausgangsimpedanz Z_{DRV} repräsentierten Treiberausgangs-Schwingkreises und des durch den Transducer gegebenen Schwingkreises (repräsentiert durch Z_{TR}) wurde im Rahmen der Erfindung für eine Beispielbetrachtung simuliert, da numerische Betrachtungen auf Grund der Komplexität der Berechnung quasi ausscheiden. Bei gleichbleibenden Bauteilen der Schwingkreise wurde die Treiberausgangsinduktivität L_{DRV} variiert. Fig. 6 zeigt die Ergebnisse bei verschieden groß gewählter Treiberausgangsinduktivität L_{DRV}. Die beiden kleineren mittleren Kurven zeigen einen Verlauf, bei dem die Energieübertragung innerhalb einer recht kleinen Bandbreite ein absolutes Maximum aufweist. Es handelt sich um den Fall der unterkritischen Kopplung der beiden Schwingkreise. Die vier äußeren Kurven zeigen in der Mitte einer größeren Bandbreite ein Minimum, was den Fall einer überkritischen Kopplung repräsentiert. Die obere mittlere Kurve zeigt das Ergebnis der kritischen Kopplung, die sich durch ein Plateau (angenähert) über eine mittlere Bandbreite auszeichnet. Durch Veränderung der Kapazität C_{TR} kann hier noch eine Optimierung im Sinne einer Anpassung des Energieeintrags über eine größere Bandbreite erzielt werden. Fig. 7 zeigt den Spannungsverlauf an einem Ultraschall-Transducer zwischen dem positiven Anschluss TR+ des Transducers TR und dem negativen Anschluss TR- des Transducers TR- aus dem Stand der Technik während eines sogenannten Burst-Pulses. Gut zu erkennen sind, dass, und wie die Ansteuerphase in der der Transducer TR mit dem Rechtecksignal angeregt wird, und das anschließende Ausschwingen.

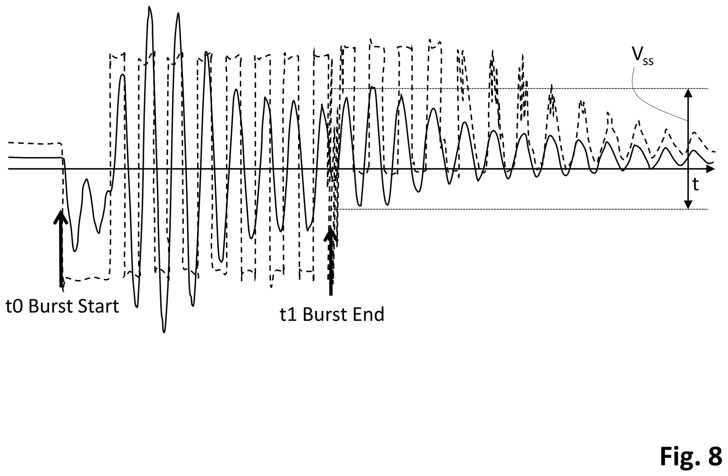

Fig. 8 zeigt das Ausschwingen des Transducers TR in der gleichen Schaltung wie die der Fig. 7 mit dem Unterschied, dass nun entsprechend dem Unterschied zwischen Fig. 1 und Fig. 3 eine Ausgangsinduktivität L_{DRV} in die Zuleitung des Transducers TR eingefügt wurde und dass deren Wert so bestimmt wurde, dass die Kopplung zwischen dem Serienresonanzkreis aus Serienkapazität C_{TRs} und Serieninduktivität L_{TRs} des Transducers TR einerseits und dem Serienresonanzkries aus Ausgangsinduktivität LDRV und Transducer-Kapazität C_{TR} und Parallelkapazität C_{TRp} des Transducers TR anderseits kritisch ist. In dem beispielhaften Versuchsaufbau, bei dem diese Schwingungen aufgezeichnet wurden, wurde ein Spitze-Spitze-Wert V_{SS} von 31,4V (Fig. 3) gemessen, was signifikant über der 12V des Aufbaus der Fig. 7 (Fig. 1) liegt. Die entsprechenden Spannungspegel der Spitzenwerte sind wieder als gestrichelte Linien eingezeichnet.

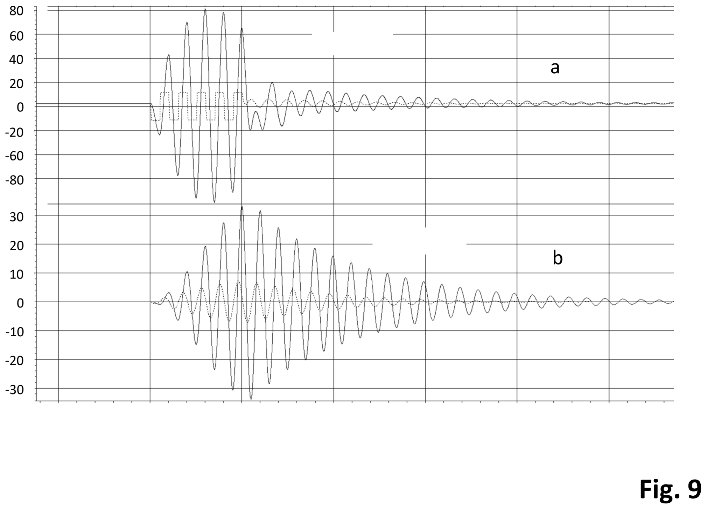

Fig. 9 zeigt die Verhältnisse besonders gut.

In Fig. 9a ist die Spannung am Transducer TR zwischen positivem Transducer-Anschluss TR+ und negativem Transducer-Anschluss TR- (gestrichelt gezeichnet) gegen das Bezugspotenzial GND für den Fall ohne zusätzliche Ausgangsinduktivität L_{DRV} dargestellt. In Fig. 9a ist außerdem die Spannung am Transducer TR zwischen positivem Transducer-Anschluss TR+ und negativem Transducer-Anschluss TR- (durchgezogen gezeichnet) gegen das Bezugspotenzial GND für den Fall MIT zusätzlicher Ausgangsinduktivität L_{DRV} dargestellt.

In Fig. 9b ist der akustische Impuls dargestellt, der sich innerhalb des elektrischen Transducer-Modells (Fig. 2) als Spannung über dem Serienwiderstand R_{TRs} darstellen lässt. Es handelt sich um Simulationskurven. Gestrichelt ist wieder der Pegel ohne Ausgangsinduktivität L_{DRV} dargestellt, durchgezogen der Pegel mit Ausgangsinduktivität L_{DRV}. Bei optimalen Verhältnissen ergibt sich ein Verhältnis von 1:4 bei der akustischen Ausgangsspannung ohne Ausgangsinduktivität L_{DRV} zu dem Pegel mit Ausgangsinduktivität L_{DRV}.

Die Erfindung lässt sich ferner alternativ durch eine der nachfolgend genannten Merkmalsgruppen umschreiben, wobei die Merkmalsgruppen beliebig miteinander kombinierbar sind und auch einzelne Merkmale einer Merkmalsgruppe mit ein oder mehreren Merkmalen einer oder mehrerer anderer Merkmalsgruppen und/oder einer oder mehrerer der zuvor beschriebenen Ausgestaltungen kombinierbar sind.
1. Betriebsschaltung für einen Transducer TR
   - mit einer Ansteuerschaltung TS, C_{bat}, T₁, T₂, T₃, T₄, T₅ und
   - mit einer Transducer-Kapazität C_{TR},
   - wobei die Ansteuerschaltung einen ersten Anschluss GND aufweist und
   - wobei die Ansteuerschaltung einen zweiten Anschluss DRV aufweist und
   - wobei die Ansteuerschaltung einen Treiberausgangswiderstand R_{DRV} aufweist, der auch ganz oder teilweise durch den Ausgangswiderstand der Ansteuerschaltung an ihrem zweiten Ausgang DRV und/oder einen zusätzlichen Treiberausgangswiderstand, der in Serie zu ihrem zweiten Ausgang geschaltet ist, gebildet wird und
   - wobei ein positiver Anschluss TR+ des Transducers TR so mit dem zweiten Anschluss DRV der Ansteuerschaltung verbunden ist, dass der Treiberausgangswiderstand R_{DRV} wirkmäßig als zwischen dem positiven Anschluss TR+ des Transducers TR und dem zweiten Anschluss DRV der Ansteuerschaltung geschaltet betrachtet werden kann, und
   - wobei ein negativer Anschluss TR- des Transducers TR mit dem ersten Anschluss GND der Ansteuerschaltung verbunden ist,
   - wobei die Betriebsschaltung eine Ausgangsinduktivität L_{DRV} aufweist, die wirkmäßig als zwischen dem positiven Anschluss TR+ des Transducers TR und dem zweiten Anschluss DRV der Ansteuerschaltung in Serie mit dem Treiberausgangswiderstand R_{DRV} geschaltet betrachtet werden kann, und
   - wobei der Wert dieser Ausgangsinduktivität L_{DRV} so bemessen ist,
   - dass ein erster Serienschwingkreis aus Serieninduktivität L_{TRs} des Ersatzschaltbilds des Transducers TR und Serienkapazität C_{TRs} des Ersatzschaltbilds des Transducers TR und
   - dass ein zweiter Serienschwingkreis aus Ausgangsinduktivität L_{DRV} und der Parallelschaltung aus Transducer-Kapazität C_{TR} und Parallelkapazität C_{TRp} des Ersatzschaltbilds des Transducers TR
      kritisch gekoppelt sind.
2. Betriebsschaltung für einen Transducer TR nach Ziffer 1, wobei die Betriebsschaltung dazu vorgesehen ist nach dem Ende einer Ansteuerphase den Transducer TR mit einer Wechselspannungsamplitude zwischen dem positiven Anschluss TR+ des Transducers TR und dem negativen Anschluss TR- des Transducers TR zu betreiben, die einen Spitze-zu-Spitze-Wert aufweist, der zu Beginn der Ausschwingphase des Transducers TR betragsmäßig mehr als das doppelte des Betrags der Spannung der Betriebsspannung V_{bat} gegen ein Bezugspotenzial GND beträgt.
3. Übertragerfreie Betriebsschaltung zur Ansteuerung eines Transducers TR insbesondere nach Ziffer 1 oder 2, wobei sie einen kapazitiven Energiespeicher C_{TR} und einen induktiven Energiespeicher L_{DRV} aufweist.
4. Verfahren zum Betreiben eines Transducers TR mit den Schritten
   - Bereitstellen des Transducers TR,
   - Koppeln des Transducers TR mit der Mittenanzapfung TR+ eines ersten Serienschwingkreises L_{DRV}, C_{TR}, C_{TRp} aus einer Ausgangsinduktivität L_{DRV} und der Parallelschaltung einer Transducer-Kapazität C_{TR} und der Parallelkapazität C_{TRp} des Transducers TR und mit einem Bezugspotenzial GND, TR-, wobei der erste Serienschwingkreis L_{DRV}, C_{TR} ebenfalls mit dem Bezugspotenzial GND gekoppelt ist,
   - Wahl des Werts der Ausgangsinduktivität L_{DRV} und des Werts der Transducer-Kapazität C_{TR} des ersten Serienschwingkreises L_{DRV}, C_{TR}, C_{TRp} in der Art, dass die Kopplung zwischen einem zweiten Serienresonanzkreis, bestehend aus der Serieninduktivität L_{TRs} des Transducers TR und der Serienkapazität C_{TRs} des Transducers TR, einerseits und dem ersten Serienresonanzkreis, bestehend aus der Ausgangsinduktivität L_{DRV} und der Parallelschaltung aus Transducer-Kapazität C_{TR} und Parallelkapazität C_{TRp} des Transducers TR, andererseits, kritisch ist, und
   - Ansteuerung dieser beiden gekoppelten Serienresonanzkreise mit einer Wechselspannung, wobei die Spitze-zu-Spitze Spannung der zur Ansteuerung genutzten Wechselspannung in zumindest einem Zeitraum kleiner ist als die messbare Wechselspannung zwischen einem ersten Anschluss TR+ und einem zweiten Anschluss TR- des Transducers TR.

### Weitere Aspekte der Erfindung:

1. Vorrichtung zum Betreiben eines Ultraschall-Transducers (TR), dessen Ersatzschaltbild eine Serienschaltung aus einer Serieninduktivität (L_{TRs}) und einer Serienkapazität (C_{TRs}) und eine zur Serienschaltung parallel geschaltete Parallelkapazität (C_{TRp}) aufweist, mit
   - einer Ansteuerschaltung (TS, C_{bat}, T₁, T₂, T₃, T₄, T₅) und
   - wobei die Ansteuerschaltung (TS, C_{bat}, T₁, T₂, T₃, T₄, T₅) einen ersten Ausgangsanschluss (GND) und einen zweiten Ausgangsanschluss (DRV) aufweist,
   - einem Treiberausgangswiderstand (R_{DRV}), der auch ganz oder teilweise durch den Ausgangswiderstand der Ansteuerschaltung (TS, C_{bat}, T₁, T₂, T₃, T₄, T₅) an ihrem zweiten Ausgang (DRV) und/oder einen zusätzlichen Treiberausgangswiderstand, der in Serie zu ihrem zweiten Ausgang geschaltet ist, gebildet wird und
   - wobei der Treiberausgangswiderstand (R_{DRV}) wirkmäßig zwischen einem positiven Anschluss (TR+) für den Transducer (TR) und dem zweiten Ausgangsanschluss (DRV) der Ansteuerschaltung (TS, C_{bat}, T₁, T₂, T₃, T₄, T₅) geschaltet ist, und
   - wobei ein negativer Anschluss (TR-) für den Transducer (TR) mit dem ersten Ausgangsanschluss (GND) der Ansteuerschaltung (TS, C_{bat}, T₁, T₂, T₃, T₄, T₅) verbunden ist, und
   - einer Transducer-Kapazität (C_{TR}), die zwischen dem positiven Anschluss (TR+) und dem negativen Anschluss (TR-) für den Transducer (TR) geschaltet ist,
   **gekennzeichnet durch,**
   - eine den Treiberausgangswiderstand (R_{DRV}) aufweisenden Treiberausgangsimpedanz (Z_{DRV}), die wirkmäßig zwischen dem positiven Anschluss (TR+) des Transducers (TR) und dem zweiten Ausgangsanschluss (DRV) der Ansteuerschaltung (TS, C_{bat}, T₁, T₂, T₃, T₄, T₅) geschaltet ist, und
   - wobei der Wert der Treiberausgangsimpedanz (Z_{DRV}) so bemessen ist, dass
   - ein erster Serienschwingkreis aus der Serieninduktivität (L_{TRs}) und der Serienkapazität (C_{TRs}) des Ersatzschaltbilds des Transducers (TR) und
   - ein zweiter Serienschwingkreis aus der Treiberausgangsimpedanz (Z_{DRV}) und der Parallelschaltung aus Transducer-Kapazität (C_{TR}) und Parallelkapazität (C_{TRp}) des Ersatzschaltbilds des Transducers (TR)
      kritisch gekoppelt sind.
2. Vorrichtung nach 1, dadurch gekennzeichnet, dass die Treiberausgangsimpedanz (Z_{DRV}) neben dem Treiberausgangswiderstand (R_{DRV}) auch eine Treiberausgangsinduktivität (L_{DRV}) und gegebenenfalls eine Treiberausgangskapazität (C_{DRV}) aufweist und dass der Wert der Treiberausgangsinduktivität (L_{DRV}) so bemessen ist, dass
   - der erste Serienschwingkreis aus der Serieninduktivität (L_{TRs}) und der Serienkapazität (C_{TRs}) des Ersatzschaltbilds des Transducers (TR) und
   - der zweite Serienschwingkreis aus der Treiberausgangsinduktivität (L_{DRV}) und der Parallelschaltung aus Transducer-Kapazität (C_{TR}) und Parallelkapazität (C_{TRp}) des Ersatzschaltbilds des Transducers (TR)
      kritisch gekoppelt sind.
3. Verwendung der Vorrichtung nach 1, gekennzeichnet dadurch, dass der Transducer (TR) nach dem Ende einer Ansteuerphase mit einer Wechselspannung zwischen dem positiven Anschluss (TR+) des Transducers (TR) und dem negativen Anschluss (TR-) des Transducers (TR) betrieben wird, die einen Spitze-zu-Spitze-Wert aufweist, der zu Beginn der Ausschwingphase des Transducers (TR) betragsmäßig mehr als das doppelte des Betrags der Betriebsspannung (V_{bat}) der Vorrichtung beträgt.
4. Verfahren zum Betreiben eines Transducers (TR) mittels der Vorrichtung nach 1 oder 2, mit den folgenden Schritten:
   - Bereitstellen des Transducers (TR),
   - Koppeln des Transducers (TR) mit der Mittenanzapfung (TR+) des ersten Serienschwingkreises (L_{DRV}, C_{TR}, C_{TRp}) aus der Treiberausgangsimpedanz (Z_{DRV}) und der Parallelschaltung aus einer Transducer-Kapazität (C_{TR}) und der Parallelkapazität (C_{TRp}) des Ersatzschaltbildes des Transducers (TR) und mit einem Bezugspotenzial (GND, TR-), wobei der erste Serienschwingkreis (L_{DRV}, C_{TR}) ebenfalls mit dem Bezugspotenzial (GND) gekoppelt ist,
   - Wahl des Werts der Treiberausgangsimpedanz (Z_{DRV}) und des Werts der Transducer-Kapazität (C_{TR}) des ersten Serienschwingkreises (L_{DRV}, C_{TR}, C_{TRp}) in der Art, dass die Kopplung zwischen einerseits dem zweiten Serienschwingkreis, bestehend aus der Serieninduktivität (L_{TRs}) und der Serienkapazität (C_{TRs}) des Ersatzschaltbildes des Transducers (TR) und andererseits dem ersten Serienschwingkreis kritisch ist, und
   - Ansteuerung der beiden gekoppelten Serienschwingkreise mit einer Wechselspannung, wobei der Spitze-zu-Spitze-Wert der zur Ansteuerung genutzten Wechselspannung in zumindest einem Zeitraum kleiner ist als die messbare Wechselspannung zwischen einem ersten Anschluss (TR+) und einem zweiten Anschluss (TR-) des Transducers (TR).

### Bezugszeichenliste

- AMP: Empfangsverstärker
- BPF: Bandpass
- C: Treiberkapazität
- C_{AING}: Koppelkapazität für den negativen Pol des Empfangssignals
- C_{AINS}: Koppelkapazität für den positiven Pol des Empfangssignals
- C_{bat}: Stützkondensator für die Betriebsspannung (V_{bat})
- C_{DRV}: Treiberausgangskapazität
- C_{EMC}: Hilfskapazität
- Cₘ: Ausgang der rechten Halbbrücke (T₃, T₄)
- Cₚ: Ausgang der linken Halbbrücke (T₁, T₂)
- C_{TR}: Transducer-Kapazität
- C_{TRp}: Parallelkapazität im Ersatzschaltbild (Fig. 2) des Transducers (TR)
- C_{TRs}: Serienkapazität im Ersatzschaltbild (Fig. 2) des Transducers (TR)
- DRV: Treiberausgang
- GND: Bezugspotenzial
- L_{DRV}: zusätzliche (Treiber-)Ausgangsinduktivität zur Einstellung des kritischen Resonanzfalles des schwingfähigen Systems vierter Ordnung aus Transducer-Kapazität (C_{TR}), Transducer (TR), ohmschen Ausgangswiderstand (R_{DRV}) und Ausgangsinduktivität (L_{DRV})
- L_{TRs}: Serieninduktivität im Ersatzschaltbild (Fig. 2) des Transducers (TR)
- R_{DRV}: ohmscher (Treiber-)Ausgangswiderstand der Treiberschaltung zur Einstellung der Bandbreite;
- R_{TRs}: Serienwiderstand im Ersatzschaltbild (Fig. 2) des Transducers (TR)
- t: Zeit
- T₁: erster Transistor (High-Side-Transistor) der linken Halbbrücke (T₁, T₂) zwischen der Betriebsspannung (V_{bat}) und dem Bezugspotenzial (GND) mit Ausgang Cₚ
- T₂: zweiter Transistor (Low-Side-Transistor) der linken Halbbrücke (T₁, T₂)
- T₃: dritter Transistor (High-Side-Transistor) der rechten Halbbrücke (T₃, T₄) zwischen dem Treiberausgang (DRV) und dem Bezugspotenzial (GND) mit Ausgang Cₘ
- T₄: vierter Transistor (Low-Side-Transistor) der rechten Halbbrücke (T₃, T₄) zwischen dem Treiberausgang (DRV) und dem Bezugspotenzial (GND) mit Ausgang Cₘ
- T₅: fünfter Transistor der Treiberschaltung
- TR: Transducer
- TR-: negativer Anschluss des Transducers (TR) an dem Bezugspotenzial (GND). Der Begriff "negativ" ist nur zu Bezeichnungszwecken gewählt, um den Anschluss vom anderen Anschluss, dem positiven Transducer-Anschluss (TR+) eindeutig zu unterscheiden
- TR+: positiver Anschluss des Transducers (TR) an den Treiberausgang (DRV) über den Treiberausgangswiderstand (R_{DRV}) und die Ausgangsinduktivität (L_{DRV}). Der Begriff "positiv" ist nur zu Bezeichnungszwecken gewählt, um den Anschluss vom anderen Anschluss, dem negativen Transducer-Anschluss(TR-) eindeutig zu unterscheiden
- TS: Treiberstufe
- V_{bat}: Betriebsspannung
- V_{batw}: Wechselspannung als Ersatz für die Betriebsspannung (V_{bat})
- V_{SS}: Spitze-zu-Spitze-Wert der Spannung zwischen dem positiven Transducer-Anschluss (TR+) des Transducers (TR) und dem negativen Transducer-Anschluss (TR-) des Transducers (TR)
- Z_{DRV}: Treiberausgangsimpedanz
- Z'_{DRV}: Treiberausgangsimpedanz (Z_{DRV}) inklusive Innenwiderstand der Treiberstufe (TS)
- Z_{TRs}: Treiberimpedanz

## Patentansprüche

1. Betriebsschaltung für einen Transducer (TR)
- mit einer Ansteuerschaltung (TS, C_{bat}, T₁, T₂, T₃, T₄, T₅) und
- mit einer Transducer-Kapazität (C_{TR}),
- wobei die Ansteuerschaltung einen ersten Anschluss (GND) aufweist und
- wobei die Ansteuerschaltung einen zweiten Anschluss (DRV) aufweist und
- wobei die Ansteuerschaltung einen Treiberausgangswiderstand (R_{DRV}) aufweist, der auch ganz oder teilweise durch den Ausgangswiderstand der Ansteuerschaltung an ihrem zweiten Ausgang (DRV) und/oder einen zusätzlichen Treiberausgangswiderstand, der in Serie zu ihrem zweiten Ausgang geschaltet ist, gebildet wird und
- wobei ein positiver Anschluss (TR+) des Transducers (TR) so mit dem zweiten Anschluss (DRV) der Ansteuerschaltung verbunden ist, dass der Treiberausgangswiderstand (R_{DRV}) wirkmäßig als zwischen dem positiven Anschluss (TR+) des Transducers (TR) und dem zweiten Anschluss (DRV) der Ansteuerschaltung geschaltet betrachtet werden kann, und
- wobei ein negativer Anschluss (TR-) des Transducers (TR) mit dem ersten Anschluss (GND) der Ansteuerschaltung verbunden ist,
- wobei die Betriebsschaltung eine Ausgangsinduktivität (L_{DRV}) aufweist, die wirkmäßig als zwischen dem positiven Anschluss (TR+) des Transducers (TR) und dem zweiten Anschluss (DRV) der Ansteuerschaltung in Serie mit dem Treiberausgangswiderstand (R_{DRV}) geschaltet betrachtet werden kann, und
- wobei der Wert dieser Ausgangsinduktivität (L_{DRV}) so bemessen ist,
- dass ein erster Serienschwingkreis aus Serieninduktivität (L_{TRs}) des Ersatzschaltbilds des Transducers (TR) und Serienkapazität (C_{TRs}) des Ersatzschaltbilds des Transducers (TR) und
- dass ein zweiter Serienschwingkreis aus Ausgangsinduktivität (L_{DRV}) und der Parallelschaltung aus Transducer-Kapazität (C_{TR}) und Parallelkapazität (C_{TRp}) des Ersatzschaltbilds des Transducers (TR) kritisch gekoppelt sind,
wobei
ein durch den Transducer TR gegebener Transducer-Schwingkreis durch eine Transducer-Impedanz Z_{TR} repräsentiert wird,
ein Treiberausgangs-Schwingkreis durch eine Treiberausgangsimpedanz Z_{DRV} repräsentiert wird, und
der durch Z_{TR} repräsentierte Transducer-Schwingkreis zusammen mit dem durch Z_{DRV} repräsentierten Treiberausgangs-Schwingkreis einen Bandpass BPF bildet.

2. Betriebsschaltung nach Anspruch 1,
- wobei sich die Transducer-Impedanz (Z_{TR}) aus der Impedanz Z_{TRs} des Serienschwingkreises des Ersatzschaltbildes des Transducers mit R_{TRs}, C_{TRs} und L_{TRs} des Transducers, der Parallelkapazität C_{TRp} des Ersatzschaltbildes des Transducers und einer externen, mit den Anschlüssen TR+ und TR- des Transducers verbundenen weiteren Parallelkapazität C_{TR} zusammensetzt.

3. Betriebsschaltung nach Anspruch 1 oder 2,
- wobei die Treiberausgangsimpedanz Z_{DRV} den Treiberausgangswiderstand R_{DRV}, die Ausgangsinduktivität L_{DRV} und optional einen kapazitiven Anteil C_{DRV} aufweist.
